# EUROPEAN PATENT SPECIFICATION

(11) **EP 3 588 649 B1**
(45) Date of publication and mention of the grant of the patent: **16.12.2020**
(21) Application number: 19181152.0
(22) Date of filing: 19.06.2019
(51) Int. Cl.: H01M 8/04223, H01M 8/04302, H01M 8/0612, H01M 8/0662, H01M 8/04089, H01M 8/04225, H01M 8/124, H01M 8/04014

(54) **FUEL CELL SYSTEM AND CONTROL METHOD THEREOF**
BRENNSTOFFZELLENSYSTEM UND STEUERUNGSVERFAHREN DAFÜR
SYSTÈME DE PILE À COMBUSTIBLE ET PROCÉDÉ DE COMMANDE POUR CELUI-CI

(30) Priority: 21.06.2018 JP 2018117518
(43) Date of publication of application: 01.01.2020
(73) Proprietor: Honda Motor Co., Ltd., Tokyo 107-8556 (JP)
(72) Inventor: TODA, Shigeru, Wako-shi, Saitama 351-0193 (JP)
(74) Representative: Weickmann & Weickmann PartmbB

(56) References cited:
- US-A1- 2016 079 622
- US-A1- 2016 172 697
- US-A1- 2017 288 246

## Description

### BACKGROUND OF THE INVENTION

### Field of the Invention:

The present invention relates to a fuel cell system having a partial oxidation reformer and a shift reactor, and a control method thereof.

### Description of the Related Art:

In fuel cell systems of this type, the partial oxidation reformer performs a partial oxidation of a raw fuel to produce a fuel gas. The shift reactor causes a shift reaction of carbon monoxide in the fuel gas produced in the partial oxidation reformer and water vapor to produce carbon dioxide and hydrogen. The shift reaction reduces carbon monoxide concentration in the fuel gas and suppresses carbon deposition in the fuel cell.

Such fuel cell systems are known which utilize water vapor contained in the exhaust gas of the fuel cell for the shift reaction (for example, refer to JP 2017-183249 A).

US 2017/288246 A1 discloses a fuel cell system comprising: a partial oxidation reformer for partially oxidizing raw fuel to produce carbon monoxide and hydrogen; a shift reactor for shift reacting the carbon monoxide with steam to produce carbon dioxide and hydrogen; a fuel stack for generating electric power by electrochemical reaction between oxidant gas and the hydrogen which is produced in at least one of the partial oxidation reformer and the shift reactor; and an exhaust gas recirculation pipe for supplying steam contained in exhaust gas of the fuel cell stack to the shift reactor but no start-up combustor.

US 2016/079622 discloses that the fuel gas of the start-up combustor is supplied to a first area, a second area, and a third area of a fuel cell module and then flows through the exhaust gas pipe and is discharged to the outside of the fuel cell module.

US 2016/172697 discloses that the fuel gas of a start-up combustor is supplied to the bypass channel and is merged into the combustion gas channel.

### SUMMARY OF THE INVENTION

In JP 2017-183249 A, a sufficient amount of water vapor is not supplied to the shift reactor at startup of the fuel cell, and then the shift reactor may be unable to efficiently reduce the CO concentration (carbon monoxide concentration) in the fuel gas. In this case, the startup time of the fuel cell may become long if the amount of fuel gas supplied to the fuel cell is limited.

The present invention has been devised taking such a problem into consideration, and an object of the present invention is to provide a fuel cell system and a control method thereof that is capable of quickly starting a fuel cell while suppressing carbon deposition in the fuel cell.

According to an aspect, the present invention provides a fuel cell system according to claim 1.

The fuel cell system includes: a partial oxidation reformer that produces a fuel gas by subjecting a raw fuel to a partial oxidation reforming; a shift reactor that causes a shift reaction of carbon monoxide in the fuel gas produced in the partial oxidation reformer and water vapor; a fuel cell that generates electric power by an electrochemical reaction between the fuel gas guided from the shift reactor and an oxygen-containing gas; an oxygen-containing gas supply path for supplying the oxygen-containing gas to the fuel cell; a startup combustor that is disposed on the oxygen-containing gas supply path and that combusts a fuel to produce a combustion gas that contains water vapor; and a combustion gas introducing path for guiding to the shift reactor, the combustion gas that was sent out from the startup combustor and passed through the fuel cell.

In another aspect, the present invention provides a method of controlling a fuel cell system according to claim 5.

The method of controlling a fuel cell system includes: a partial oxidation reformer that produces a fuel gas by subjecting a raw fuel to a partial oxidation reforming; a shift reactor that causes a shift reaction of carbon monoxide in the fuel gas produced in the partial oxidation reformer and water vapor; and a fuel cell that generates electric power by an electrochemical reaction of the fuel gas guided from the shift reactor and an oxygen-containing gas guided from an oxygen-containing gas supply path. The fuel cell system control method includes: a combustion step of combusting a fuel in a startup combustor provided on the oxygen-containing gas supply path to produce a combustion gas that contains water vapor; a reforming step of performing the partial oxidation reforming of the raw fuel in the partial oxidation reformer to produce the fuel gas; and a shift reaction step of causing, in the shift reactor, the shift reaction of the water vapor in the combustion gas that was sent out from the startup combustor and passed through the fuel cell and the carbon monoxide in the fuel gas produced in the reforming step.

According to this invention, at startup of the fuel cell, it is possible to raise the temperature of the fuel cell by the combustion gas produced in the startup combustor. It is also possible to cause a shift reaction using the water vapor in the combustion gas and thus the shift reactor can efficiently reduce CO concentration in the fuel gas. It is thus possible to quickly start the fuel cell while suppressing carbon deposition in the fuel cell.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1 is a schematic configuration explanatory diagram of a fuel cell system according to a first embodiment of the present invention;
FIG. 2 is a block diagram of the control unit of FIG. 1;
FIG. 3A is an explanatory diagram illustrating reforming maps used during startup, FIG. 3B is an explanatory diagram illustrating reforming maps used during power generation;
FIG. 4 is a first flowchart illustrating a method of controlling the fuel cell system of FIG. 1;
FIG. 5 is a second flowchart illustrating the method of controlling the fuel cell system of FIG. 1;
FIG. 6 is a schematic configuration explanatory diagram showing a fuel cell system according to a second embodiment of the present invention;
FIG. 7 is a schematic configuration explanatory diagram showing a fuel cell system according to a third embodiment of the present invention; and
FIG. 8 is a schematic configuration explanatory diagram showing a fuel cell system according to a fourth embodiment of the present invention.

### DESCRIPTION OF THE PREFERRED EMBODIMENTS

The fuel cell system and control method thereof according to the present invention will now be described in conjunction with preferred embodiments while referring to the accompanying drawings.

### (First Embodiment)

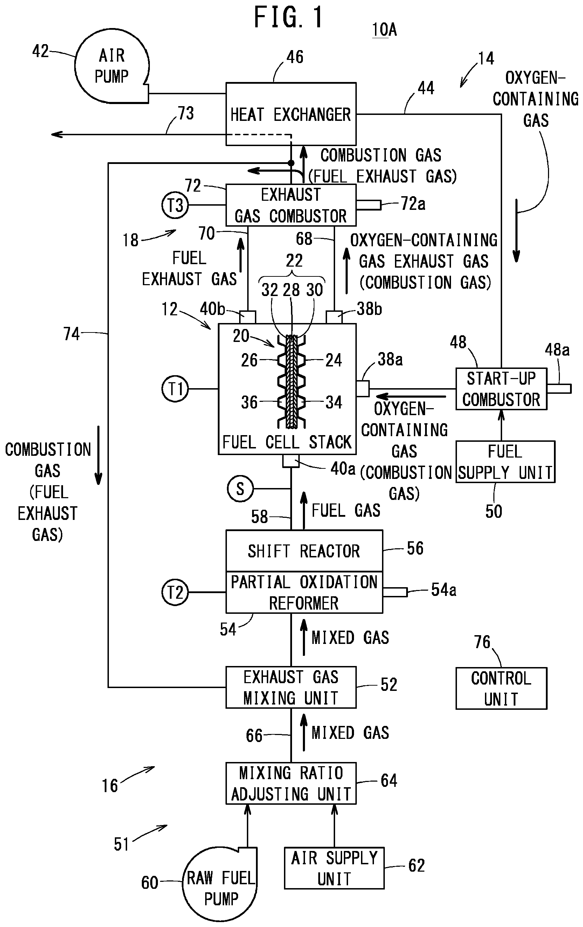

As shown in FIG. 1, a fuel cell system 10A according to this embodiment is used for a variety of applications from stationary use to onboard use. The fuel cell system 10A can also be used as a so-called portable power generator.

The fuel cell system 10A includes a fuel cell stack 12 as a fuel cell, an oxygen-containing gas supply device 14, a fuel gas supply device 16, and a discharge device 18.

The fuel cell stack 12 includes a plurality of unit cells 20 stacked on one another, and a set of end plates (not shown) disposed at both ends of the direction in which the plurality of unit cells 20 are stacked. The fuel cell stack 12 is not limited to the example of planar stack type but may be of tubular type. The unit cells 20 are configured as solid oxide fuel cells (SOFCs) that generate electric power by an electrochemical reaction of fuel gas (hydrogen gas) and oxygen-containing gas (air) .

Each unit cell 20 includes an electrolyte electrode assembly 22, and a cathode separator 24 and an anode separator 26 that sandwich the electrolyte electrode assembly 22. The cathode separator 24 and the anode separator 26 may be configured as a two-sided bipolar separator. The electrolyte electrode assembly 22 includes a sheet-like electrolyte 28, a cathode 30 provided on one surface of the electrolyte 28, and an anode 32 provided on the other surface of the electrolyte 28. The electrolyte 28 is made of an oxide ion conductor such as stabilized zirconia, for example.

The surface of the cathode separator 24 that faces the cathode 30 has an oxygen-containing gas flow field 34 formed therein. The surface of the anode separator 26 that faces the anode 32 has a fuel gas flow field 36 formed therein.

The fuel cell stack 12 has an oxygen-containing gas inlet 38a, an oxygen-containing gas outlet 38b, a fuel gas inlet 40a, and a fuel gas outlet 40b. The oxygen-containing gas inlet 38a passes through each unit cell 20 in the stacking direction and communicates with the supply side of the oxygen-containing gas flow field 34. The oxygen-containing gas outlet 38b passes through each unit cell 20 in the stacking direction and communicates with the discharge side of the oxygen-containing gas flow field 34. The oxygen-containing gas flow field 34, the oxygen-containing gas inlet 38a, and the oxygen-containing gas outlet 38b constitute a cathode flow field.

The fuel gas inlet 40a passes through each unit cell 20 in the stacking direction and communicates with the supply side of the fuel gas flow field 36. The fuel gas outlet 40b passes through each unit cell 20 in the stacking direction and communicates with the discharge side of the fuel gas flow field 36. The fuel gas flow field 36, the fuel gas inlet 40a, and the fuel gas outlet 40b constitute an anode flow field.

The oxygen-containing gas supply device 14 includes an air pump 42 and an oxygen-containing gas supply path 44. The oxygen-containing gas supply path 44 supplies an oxygen-containing gas (air) sent out from the air pump 42 to the oxygen-containing gas inlet 38a of the fuel cell stack 12. A heat exchanger 46 and a startup combustor 48 are disposed on the oxygen-containing gas supply path 44. The heat exchanger 46 heats the oxygen-containing gas by effecting heat exchange between the oxygen-containing gas and a combustion gas that is guided from an exhaust gas combustor 72 that will be described later.

The startup combustor 48 is provided on the oxygen-containing gas supply path 44 in the vicinity of the oxygen-containing gas inlet 38a of the fuel cell stack 12. Alternatively, the startup combustor 48 may be provided directly to the oxygen-containing gas inlet 38a. The startup combustor 48 combusts the oxygen-containing gas and a fuel supplied from a fuel supply unit 50 at the time of startup of the fuel cell stack 12 and thereby produces a combustion gas. The startup combustor 48 includes an ignition device 48a such as an igniter. The fuel supply unit 50 is configured as a fuel pump, for example. However, the fuel used in the startup combustor 48 may be supplied from a raw fuel pump 60 of the fuel gas supply device 16.

The fuel gas supply device 16 includes a raw fuel supply device 51, an exhaust gas mixing unit 52, a partial oxidation reformer 54, a shift reactor 56, and a fuel gas supply path 58.

The raw fuel supply device 51 includes the raw fuel pump 60, an air supply unit 62, a mixing ratio adjusting unit 64, and a mixed gas supply path 66. The raw fuel pump 60 supplies a raw fuel mainly containing hydrocarbon (e.g. city gas) to the mixing ratio adjusting unit 64. The air supply unit 62 supplies air to the mixing ratio adjusting unit 64. The air supplied to the mixing ratio adjusting unit 64 may be supplied from the air pump 42 of the oxygen-containing gas supply device 14.

The mixing ratio adjusting unit 64 adjusts a mixing ratio of the raw fuel and air. The mixed gas supply path 66 guides the mixed gas of raw fuel and air to the partial oxidation reformer 54. The exhaust gas mixing unit 52 is disposed on the mixed gas supply path 66. The exhaust gas mixing unit 52 is an ejector that introduces into the mixed gas supply path 66, a combustion gas that is guided from a combustion gas introducing path 74 that will be described later. However, the exhaust gas mixing unit 52 is not limited to an ejector but may be a mixer or the like.

The partial oxidation reformer 54 performs a partial oxidation reforming of the raw fuel containing hydrocarbon to produce a fuel gas that contains carbon monoxide and hydrogen gas etc. (reform gas). A partial oxidation reaction catalyst used in the partial oxidation reformer 54 may be Pt (platinum), Rh (rhodium), or Pd (palladium), or the like, for example. Temperatures around 500°C to 1000°C are desirable for the partial oxidation reformer 54. The partial oxidation reformer 54 includes an ignition device 54a such as an igniter.

The shift reactor 56 causes a shift reaction of the carbon monoxide in the fuel gas produced in the partial oxidation reformer 54 and water vapor to produce carbon dioxide and hydrogen gas. The shift reactor 56 is provided integrally with the partial oxidation reformer 54. However, the shift reactor 56 need not necessarily be provided integrally with the partial oxidation reformer 54 as long as it is continuous with the partial oxidation reformer 54. The fuel gas supply path 58 supplies the fuel gas from the shift reactor 56 to the fuel gas inlet 40a of the fuel cell stack 12.

The discharge device 18 includes an oxygen-containing gas discharge path 68, a fuel gas discharge path 70, an exhaust gas combustor 72, and a combustion gas send-out path 73.

The oxygen-containing gas discharge path 68 connects the oxygen-containing gas outlet 38b of the fuel cell stack 12 and the exhaust gas combustor 72 to each other. The oxygen-containing gas discharge path 68 guides, from the fuel cell stack 12 to the exhaust gas combustor 72, an oxygen-containing gas exhaust gas as oxygen-containing gas that has at least partially been used at the cathodes 30.

The fuel gas discharge path 70 connects the fuel gas outlet 40b of the fuel cell stack 12 and the exhaust gas combustor 72 to each other. The fuel gas discharge path 70 guides from the fuel cell stack 12 to the exhaust gas combustor 72 a fuel exhaust gas as fuel gas that has at least partially been used at the anodes 32.

The exhaust gas combustor 72 combusts the oxygen-containing gas exhaust gas guided from the oxygen-containing gas discharge path 68 and the fuel exhaust gas guided from the fuel gas discharge path 70 to produce a combustion gas. The exhaust gas combustor 72 includes an ignition device 72a such as an igniter. The exhaust gas combustor 72 may employ self-ignition of the oxygen-containing gas exhaust gas and fuel exhaust gas. The ignition device 72a can be omitted in this case.

The combustion gas send-out path 73 discharges the combustion gas guided from the exhaust gas combustor 72 into the atmosphere through the heat exchanger 46. One end of the combustion gas introducing path 74 is connected to the combustion gas send-out path 73 on the side upstream of the heat exchanger 46. The other end of the combustion gas introducing path 74 is connected to the exhaust gas mixing unit 52. The combustion gas introducing path 74 guides to the shift reactor 56, the combustion gas containing water vapor that was produced in the startup combustor 48 and went through the fuel cell stack 12.

The fuel cell system 10A further includes a fuel cell temperature detecting unit T1, a reformer temperature detecting unit T2, an exhaust gas combustor temperature detecting unit T3, a CO sensor S, and a control unit 76.

The fuel cell temperature detecting unit T1 detects a temperature of the fuel cell stack 12. The reformer temperature detecting unit T2 detects a temperature of the partial oxidation reformer 54. The exhaust gas combustor temperature detecting unit T3 detects a temperature of the exhaust gas combustor 72. The CO sensor S is disposed on the fuel gas supply path 58. The CO sensor S detects a CO concentration (carbon monoxide concentration) in the fuel gas flowing in the fuel gas supply path 58 (the fuel gas produced in the partial oxidation reformer 54) .

The control unit 76 is a computer including a microcomputer, which is composed of a CPU (Central Processing Unit), ROM and RAM as memory, and so on. The control unit 76 functions as a various functions realizing unit (function realizing means) as the CPU reads and executes programs stored in the ROM. The various functions realizing unit may be composed of a function realizing device as hardware. The control unit 76 controls driving of the air pump 42, the raw fuel pump 60, and the air supply unit 62.

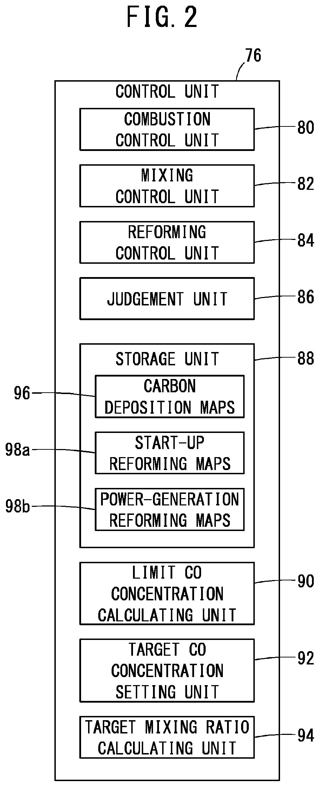

As shown in FIG. 2, the control unit 76 includes a combustion control unit 80, a mixing control unit 82, a reforming control unit 84, a judgement unit 86, a storage unit 88, a limit CO concentration calculating unit 90, a target CO concentration setting unit 92, and a target mixing ratio calculating unit 94.

The combustion control unit 80 controls the supply of fuel from the fuel supply unit 50 to the startup combustor 48. The combustion control unit 80 also controls ignition of the ignition device 48a of the startup combustor 48 and ignition of the ignition device 72a of the exhaust gas combustor 72. The mixing control unit 82 controls driving of the mixing ratio adjusting unit 64. The reforming control unit 84 controls ignition of the ignition device 54a of the partial oxidation reformer 54. The judgement unit 86 judges whether the combustion gas produced in the startup combustor 48 has reached the shift reactor 56.

The storage unit 88 contains carbon deposition maps 96, start-up reforming maps 98a, and power-generation reforming maps 98b that are stored therein in advance. The carbon deposition maps 96 are maps that define relations between temperature of the fuel cell stack 12 and carbon deposition in the fuel cell stack 12. Specifically, graphs indicating variations of carbon deposition risk with respect to the temperature of the fuel cell stack 12 are used as the carbon deposition maps 96, for example. Multiple graphs are prepared for different compositions of the fuel gas (reform gas).

The start-up reforming maps 98a are maps that define relations among temperature of the partial oxidation reformer 54, CO concentration in the fuel gas produced in the partial oxidation reformer 54, and the mixing ratio of the raw fuel and air supplied to the partial oxidation reformer 54.

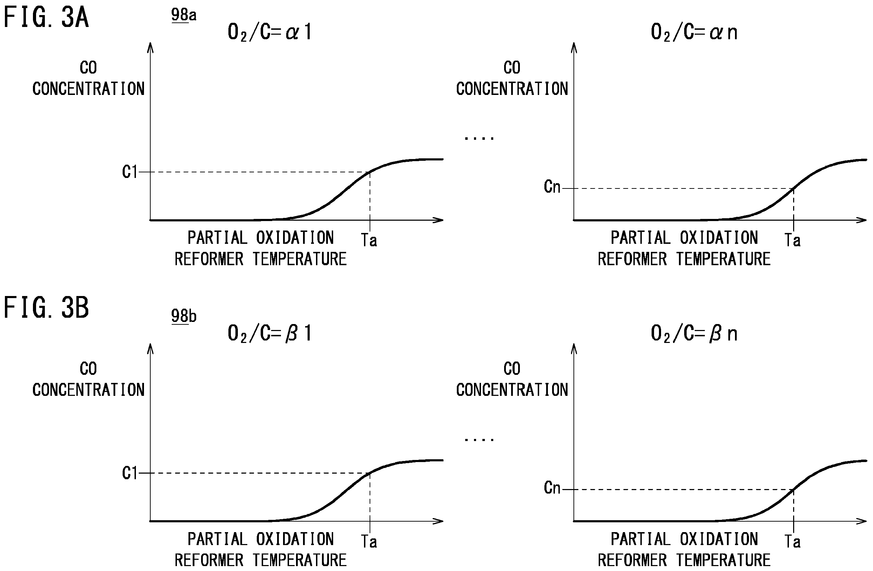

Specifically, as shown in FIG. 3A, multiple graphs (e.g. n graphs) for different mixing ratios (oxygen to carbon ratios: O₂/C) are used as the start-up reforming maps 98a. Each graph shows a variation of the CO concentration with respect to the temperature of the partial oxidation reformer 54. In other words, in each graph, the horizontal axis indicates the temperature of the partial oxidation reformer 54 and the vertical axis indicates the CO concentration.

As shown in FIG. 3A, in the start-up reforming maps 98a, for example, when the temperature of the partial oxidation reformer 54 is Ta, then the CO concentration is C1 when O₂/C=α1, and the CO concentration is Cn when O₂/C=αn. In the example of FIG. 3A, αn is larger than α1, and Cn is smaller than C1. That is, in the start-up reforming maps 98a, when the temperature of the partial oxidation reformer 54 is constant, then the CO concentration decreases as the mixing ratio (O₂/C) becomes larger.

The power-generation reforming maps 98b are maps that define relations among the temperature of the partial oxidation reformer 54, the CO concentration in the fuel gas produced in the partial oxidation reformer 54, and the mixing ratio of raw fuel and air supplied to the partial oxidation reformer 54.

Specifically, as shown in FIG. 3B, multiple graphs (e.g. n graphs) for different mixing ratios (oxygen to carbon ratios: O₂/C) are used as the power-generation reforming maps 98b. Each graph shows a variation of the CO concentration with respect to the temperature of the partial oxidation reformer 54. In other words, in each graph, the horizontal axis indicates the temperature of the partial oxidation reformer 54 and the vertical axis indicates the CO concentration.

As shown in FIG. 3B, in the power-generation reforming maps 98b, for example, when the temperature of the partial oxidation reformer 54 is Ta, then the CO concentration is C1 when O₂/C=β1, and the CO concentration is Cn when O_{2/}C=βn. In the example of FIG. 3B, βn is larger than β1, and Cn is smaller than C1. That is, in the power-generation reforming maps 98b, when the temperature of the partial oxidation reformer 54 is constant, then the CO concentration decreases as the mixing ratio (O₂/C) becomes larger. Note that β1 is smaller than α1 in the start-up reforming maps 98a.

In this embodiment, at startup of the fuel cell stack 12, water produced by power generation of the fuel cell stack 12 is not introduced into the shift reactor 56, and the water in the combustion gas produced in the startup combustor 48 is introduced into the shift reactor 56. On the other hand, during power generation of the fuel cell stack 12, water produced by the power generation is introduced into the shift reactor 56. That is, the amount of water introduced into the shift reactor 56 differs between during startup and during power generation of the fuel cell stack 12. Also, in accordance with the amount of water introduced into the shift reactor 56, the CO concentration in the fuel gas produced by the partial oxidation reformer 54 and the shift reactor 56 varies. Accordingly, this embodiment prepares the two kinds of reforming maps, including the start-up reforming maps 98a and the power-generation reforming maps 98b.

The start-up reforming maps 98a and the power-generation reforming maps 98b need not necessarily be such multiple graphs as shown in FIGS. 3A and 3B. For example, multiple graphs for different temperatures of the partial oxidation reformer 54 may be used as the start-up reforming maps 98a and the power-generation reforming maps 98b. In this case, in each graph, the horizontal axis indicates the mixing ratio (O₂/C) and the vertical axis indicates the CO concentration.

In FIG. 2, using the carbon deposition maps 96, the limit CO concentration calculating unit 90 calculates a limit CO concentration in the fuel gas at which carbon deposition to the fuel cell stack 12 begins. The target CO concentration setting unit 92 sets a target CO concentration in the fuel gas at a concentration smaller than the limit CO concentration. From the temperature detected at the reformer temperature detecting unit T2 and the target CO concentration, the target mixing ratio calculating unit 94 calculates a target mixing ratio (target O₂/C) of the raw fuel and air supplied to the partial oxidation reformer 54, by using the start-up reforming maps 98a or power-generation reforming maps 98b.

Next, a method of controlling the fuel cell system 10A will be described.

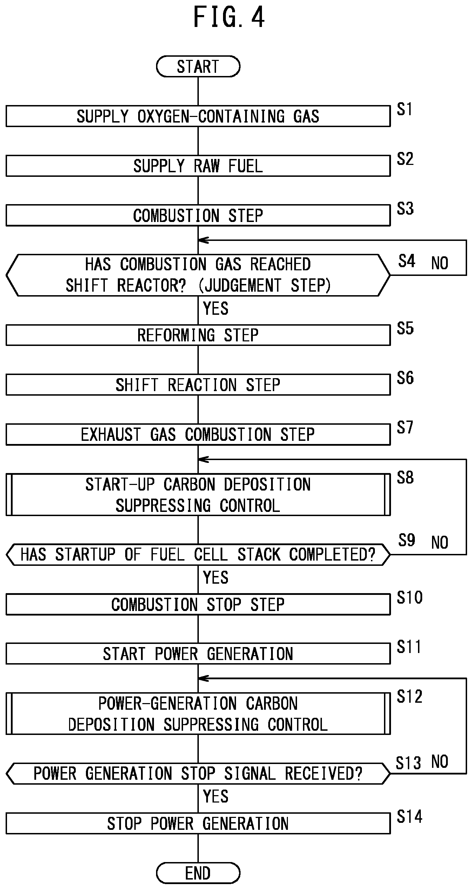

When starting the fuel cell system 10A, at step S1 in FIG. 4, the control unit 76 drives the air pump 42 to supply oxygen-containing gas to the oxygen-containing gas supply path 44. The oxygen-containing gas supplied from the air pump 42 to the oxygen-containing gas supply path 44 is guided to the startup combustor 48 through the heat exchanger 46.

At step S2, the control unit 76 drives the raw fuel pump 60 to supply raw fuel to the mixing ratio adjusting unit 64 and drives the air supply unit 62 to supply air to the mixing ratio adjusting unit 64. The raw fuel and air are mixed in the mixing ratio adjusting unit 64.

Subsequently, at step S3 (combustion step), the combustion control unit 80 starts combustion of the startup combustor 48. Specifically, the combustion control unit 80 starts the supply of fuel from the fuel supply unit 50 to the startup combustor 48 and ignites the ignition device 48a of the startup combustor 48.

Then, in the startup combustor 48, the oxygen-containing gas and fuel are mixed and ignited by the ignition device 48a, producing combustion gas. The combustion gas contains water vapor. The combustion gas produced in the startup combustor 48 is guided to the oxygen-containing gas outlet 38b through the oxygen-containing gas inlet 38a and the oxygen-containing gas flow fields 34 of the fuel cell stack 12. The temperature of the fuel cell stack 12 is thus raised.

The combustion gas sent out from the oxygen-containing gas outlet 38b of the fuel cell stack 12 is guided to the combustion gas send-out path 73 through the oxygen-containing gas discharge path 68 and the exhaust gas combustor 72. The combustion gas guided to the combustion gas send-out path 73 branches off to the combustion gas introducing path 74 on the side upstream of the heat exchanger 46. At the heat exchanger 46, heat of the combustion gas is transferred to the oxygen-containing gas flowing in the oxygen-containing gas supply path 44. The combustion gas having passed through the heat exchanger 46 is sent out to the combustion gas send-out path 73 on the downstream side of the heat exchanger 46. The combustion gas guided to the combustion gas introducing path 74 is guided to the exhaust gas mixing unit 52. The combustion gas introduced into the mixed gas in the exhaust gas mixing unit 52 is guided, together with the mixed gas, to the partial oxidation reformer 54 and the shift reactor 56 through the mixed gas supply path 66. The water vapor contained in the combustion gas is thus supplied to the shift reactor 56.

At this time, at step S4 (judgement step), the judgement unit 86 judges whether the combustion gas produced at the startup combustor 48 has reached the shift reactor 56. Specifically, the judgement unit 86 judges that the combustion gas has not reached the shift reactor 56 if temperature rise of the exhaust gas combustor 72 has not started, and judges that the combustion gas has reached the shift reactor 56 if temperature rise of the exhaust gas combustor 72 has started. Whether the temperature rise of the exhaust gas combustor 72 has started is judged by the judgement unit 86 based on the temperature detected at the exhaust gas combustor temperature detecting unit T3.

If the judgement unit 86 judges that the combustion gas has not reached the shift reactor 56 (step S4: NO), the processing of step S4 is repeated. If the judgement unit 86 judges that the combustion gas has reached the shift reactor 56 (step S4: YES), then, at step S5 (reforming step), the reforming control unit 84 ignites the ignition device 54a of the partial oxidation reformer 54.

In this way, in the partial oxidation reformer 54, the raw fuel is subjected to a partial oxidation reforming to produce fuel gas (gas that contains carbon monoxide and hydrogen). The fuel gas produced in the partial oxidation reformer 54 is guided to the shift reactor 56.

Then, at step S6 (shift reaction step), the shift reactor 56 conducts a shift reaction of the carbon monoxide in the fuel gas and the water vapor in the combustion gas to produce carbon dioxide and hydrogen gas. The fuel gas (hydrogen gas etc.) sent out from the shift reactor 56 is guided from the fuel gas inlet 40a to the fuel gas flow fields 36.

The fuel gas produced in the partial oxidation reformer 54 is guided to the exhaust gas combustor 72 through the fuel cell stack 12 and the fuel gas discharge path 70. Then, at step S7 (exhaust gas combustion step), the combustion control unit 80 ignites the ignition device 72a of the exhaust gas combustor 72. The fuel gas guided to the exhaust gas combustor 72 is thus ignited and combustion gas is produced. The combustion gas produced in the exhaust gas combustor 72 is guided to the combustion gas introducing path 74 and the heat exchanger 46 through the combustion gas send-out path 73.

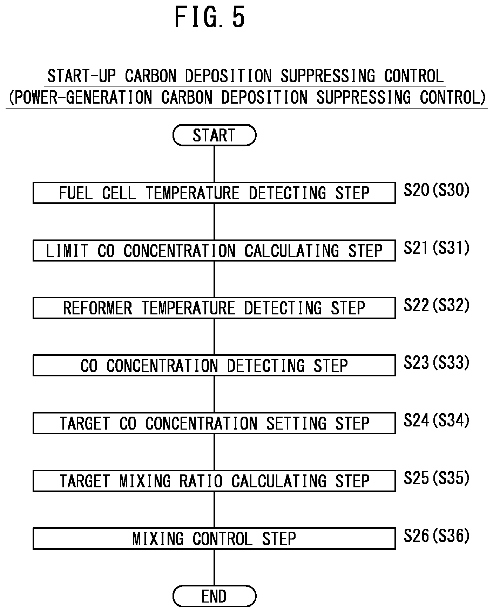

After the ignition device 54a of the partial oxidation reformer 54 has been started, then at step S8, a start-up carbon deposition suppressing control is performed. Specifically, at step S20 of FIG. 5 (fuel cell temperature detecting step), the fuel cell temperature detecting unit T1 detects a temperature of the fuel cell stack 12. Next, at step S21 (limit CO concentration calculating step), the limit CO concentration calculating unit 90 calculates the limit CO concentration using the temperature detected at the fuel cell temperature detecting unit T1 and the carbon deposition maps 96. That is, using the carbon deposition maps 96, the limit CO concentration calculating unit 90 calculates the limit CO concentration as a lowest limit value of the CO concentration at which carbon deposits in the fuel cell stack 12 at the temperature of the fuel cell stack 12 detected by the fuel cell temperature detecting unit T1.

Subsequently, at step S22 (reformer temperature detecting step), the reformer temperature detecting unit T2 detects a temperature of the partial oxidation reformer 54. Then, at step S23 (CO concentration detecting step), the CO sensor S detects the current CO concentration in the fuel gas flowing in the fuel gas supply path 58.

Subsequently, at step S24 (target CO concentration setting step), the target CO concentration setting unit 92 sets the target CO concentration at a highest CO concentration in a region lower than the limit CO concentration. However, the target CO concentration setting unit 92 may set the target CO concentration in any manner as long as it is within a range lower than the limit CO concentration.

Next, at step S25 (target mixing ratio calculating step), the target mixing ratio calculating unit 94 calculates the target mixing ratio using the temperature detected at the reformer temperature detecting unit T2, the target CO concentration, and the start-up reforming maps 98a. That is, in the example of FIG. 3A, if the partial oxidation reformer 54 is at the temperature Ta and the target CO concentration is Cn, then the target mixing ratio (O₂/C) calculated using the start-up reforming maps is αn.

Subsequently, at step S26 of FIG. 5 (mixing control step), the mixing control unit 82 controls operation of the mixing ratio adjusting unit 64 such that the CO concentration detected by the CO sensor S becomes the target CO concentration. That is, the mixing control unit 82 controls operation of the mixing ratio adjusting unit 64 such that the mixing ratio of the raw fuel and air becomes the target mixing ratio.

Subsequently, at step S9 in FIG. 4, the control unit 76 determines whether the startup of the fuel cell stack 12 has been completed.

If the control unit 76 determines that the startup of the fuel cell stack 12 is uncompleted (step S9: NO), the start-up carbon deposition suppressing control at step S8 is performed again.

If the control unit 76 determines that the startup of the fuel cell stack 12 has been completed (step S9: YES), then at step S10 (combustion stop step), the combustion control unit 80 stops the supply of fuel from the fuel supply unit 50 to the startup combustor 48.

Next, at step S11, power generation of the fuel cell stack 12 is started. That is, the oxygen-containing gas flowing in the oxygen-containing gas supply path 44 is supplied to the oxygen-containing gas inlet 38a of the fuel cell stack 12. The oxygen-containing gas is introduced from the oxygen-containing gas inlet 38a into the oxygen-containing gas flow fields 34 and moves along the oxygen-containing gas flow fields 34 to be supplied to the cathodes 30 of the electrolyte electrode assemblies 22.

On the other hand, the fuel gas flowing in the fuel gas supply path 58 is supplied to the fuel gas inlet 40a of the fuel cell stack 12. The fuel gas is introduced from the fuel gas inlet 40a into the fuel gas flow fields 36 and moves along the fuel gas flow fields 36 to be supplied to the anodes 32 of the electrolyte electrode assemblies 22.

Thus, in each electrolyte electrode assembly 22, the oxygen in the oxygen-containing gas supplied to the cathode 30 and the hydrogen gas in the fuel gas supplied to the anode 32 are consumed by the electrochemical reaction and power generation is started. Water is produced during the power generation.

The oxygen-containing gas supplied to and partially consumed at the cathode 30 is guided, as oxygen-containing gas exhaust gas, together with the water, to the exhaust gas combustor 72 through the oxygen-containing gas discharge path 68. The fuel gas supplied to and partially consumed at the anode 32 is guided, as fuel exhaust gas, together with the water, to the exhaust gas combustor 72 through the fuel gas discharge path 70.

Then, in the exhaust gas combustor 72, the oxygen-containing gas exhaust gas and the fuel exhaust gas are ignited and combustion gas is produced. The combustion gas produced in the exhaust gas combustor 72 is guided to the combustion gas introducing path 74 and the heat exchanger 46 through the combustion gas send-out path 73. At the heat exchanger 46, heat of the combustion gas is transferred to the oxygen-containing gas in the oxygen-containing gas supply path 44.

Part of the combustion gas that is guided into the combustion gas introducing path 74 from the combustion gas send-out path 73 at a side upstream of the heat exchanger 46 is guided to the fuel cell stack 12 through the exhaust gas mixing unit 52, partial oxidation reformer 54, shift reactor 56, and fuel gas supply path 58. That is, the water in the combustion gas guided to the combustion gas introducing path 74 is used in the shift reaction at the shift reactor 56. The remaining combustion gas that was not guided to the combustion gas introducing path 74 is discharged into the atmosphere through the combustion gas send-out path 73.

During the power generation of the fuel cell stack 12, at step S12, the power-generation carbon deposition suppressing control is performed. As shown in FIG. 5, the power-generation carbon deposition suppressing control includes a fuel cell temperature detecting step (step S30), a limit CO concentration calculating step (step S31), a reformer temperature detecting step (step S32), a CO concentration detecting step (step S33), a target CO concentration setting step (step S34), a target mixing ratio calculating step (step S35), and a mixing control step (step S36).

The power-generation carbon deposition suppressing control steps S30 to S34 and step S36 include the same processing as the start-up carbon deposition suppressing control steps S20 to S24 and step S26. At the target mixing ratio calculating step (step S35) of the power-generation carbon deposition suppressing control, the target mixing ratio calculating unit 94 calculates the target mixing ratio using the temperature detected at the reformer temperature detecting unit T2, the target CO concentration, and the power-generation reforming maps 98b. That is, the target mixing ratio calculating step of step S35 carries out the same processing as the above-described target mixing ratio calculating step of step S25, except that the power-generation reforming maps 98b are used in place of the start-up reforming maps 98a.

After the power-generation carbon deposition suppressing control (after step S36), then at step S13 of FIG. 4, the control unit 76 determines whether a power generation stop signal for the fuel cell stack 12 has been received. If the control unit 76 determines that the power generation stop signal for the fuel cell stack 12 has not been received (step S13: NO), the power-generation carbon deposition suppressing control at step S12 is performed again. If the control unit 76 determines the power generation stop signal for the fuel cell stack 12 has been received (step S13: YES), the control unit 76 then stops the power generation at step S14. The present flowchart thus ends.

The fuel cell system 10A and the control method of the fuel cell system 10A offer the following effects.

According to this embodiment, at startup of the fuel cell (fuel cell stack 12), it is possible to raise the temperature of the fuel cell (fuel cell stack 12) by the combustion gas produced in the startup combustor 48. It is also possible to cause a shift reaction using the water vapor in the combustion gas and thus the shift reactor 56 can efficiently reduce CO concentration in the fuel gas. It is thus possible to quickly start the fuel cell (fuel cell stack 12) while suppressing carbon deposition at the fuel cell (fuel cell stack 12).

The partial oxidation reformer 54 includes an ignition device 54a, and the fuel cell system 10A includes a reforming control unit 84 configured to control ignition of the ignition device 54a. At startup of the fuel cell (fuel cell stack 12), the reforming control unit 84 does not ignite the ignition device 54a until the combustion gas reaches the shift reactor 56, and ignites the ignition device 54a when the combustion gas has reached the shift reactor 56.

In the control method of the fuel cell system 10A, in the reforming step, at startup of the fuel cell (fuel cell stack 12), the ignition device 54a of the partial oxidation reformer 54 is not ignited until the combustion gas reaches the shift reactor 56, and the ignition device 54a is ignited when the combustion gas has reached the shift reactor 56.

The configuration and method above suppress formation of carbon monoxide in the partial oxidation reformer 54 before the combustion gas reaches the shift reactor 56 at startup of the fuel cell (fuel cell stack 12). This further suppresses carbon deposition in the fuel cell (fuel cell stack 12). Also, since the ignition device 54a is ignited when the combustion gas reaches the shift reactor 56, the partial oxidation reformer 54 can efficiently produce the fuel gas.

The fuel cell system 10A further includes: a fuel supply unit 50 configured to supply the fuel to the startup combustor 48; and a combustion control unit 80 configured to control the supply of the fuel from the fuel supply unit 50 to the startup combustor 48. The combustion control unit 80 is configured to continue the supply of the fuel from the fuel supply unit 50 to the startup combustor 48 until startup of the fuel cell stack 12 is completed, and to stop the supply of the fuel from the fuel supply unit 50 to the startup combustor 48 when the startup of the fuel cell stack 12 is completed.

In the method of controlling the fuel cell system 10A, in the combustion step, the supply of the fuel from the fuel supply unit 50 to the startup combustor 48 is continued until the startup of the fuel cell (fuel cell stack 12) is completed, and a combustion stop step of stopping the supply of the fuel from the fuel supply unit 50 to the startup combustor 48 is performed when the startup of the fuel cell (fuel cell stack 12) is completed.

According to the configuration and method, it is possible to start power generation of the fuel cell (fuel cell stack 12) immediately after the completion of startup of the fuel cell (fuel cell stack 12).

The fuel cell system 10A further includes: a combustion gas send-out path 73 to which the combustion gas passed through the fuel cell (fuel cell stack 12) is guided; and a heat exchanger 46 for transferring heat between the combustion gas flowing in the combustion gas send-out path 73 and the oxygen-containing gas flowing in the oxygen-containing gas supply path 44. The combustion gas introducing path 74 is connected to the combustion gas send-out path 73 on a side upstream of the heat exchanger 46.

According to the configuration, it is possible, at startup of the fuel cell (fuel cell stack 12) to efficiently heat the oxygen-containing gas by the combustion gas produced in the startup combustor 48.

The fuel cell system 10A further includes: a mixed gas supply path 66 for supplying a mixed gas of the raw fuel and an oxygen-containing gas to the partial oxidation reformer 54; and an exhaust gas mixing unit 52 disposed on the mixed gas supply path 66. The combustion gas introducing path 74 is connected to the exhaust gas mixing unit 52.

According to the configuration above, it is possible to guide the combustion gas to the shift reactor 56 by means of a simple configuration.

According to this embodiment, the mixing ratio of the raw fuel and air supplied to the partial oxidation reformer 54 is adjusted such that the CO concentration detected by the CO sensor S becomes a target CO concentration, whereby the CO concentration in the fuel gas supplied to the fuel cell (fuel cell stack 12) can be controlled appropriately. This suppresses carbon deposition at the fuel cell (fuel cell stack 12).

The fuel cell system 10A includes: a fuel cell temperature detecting unit T1 configured to detect a temperature of the fuel cell (fuel cell stack 12); and a limit CO concentration calculating unit 90 configured to calculate, from the temperature detected by the fuel cell temperature detecting unit T1, a limit CO concentration in the fuel gas at which carbon deposition to the fuel cell (fuel cell stack 12) begins, by using a carbon deposition map 96 defining a relation between the temperature of the fuel cell (fuel cell stack 12) and the carbon deposition at the fuel cell (fuel cell stack 12). A target CO concentration setting unit 92 is configured to set a target CO concentration at a concentration lower than the limit CO concentration.

A method of controlling the fuel cell system 10A includes: a fuel cell temperature detecting step of detecting a temperature of the fuel cell (fuel cell stack 12); and a limit CO concentration calculating step of calculating, from the temperature detected at the fuel cell temperature detecting step, a limit CO concentration in the fuel gas at which carbon deposition to the fuel cell (fuel cell stack 12) begins, by using a carbon deposition map 96 defining a relation between the temperature of the fuel cell (fuel cell stack 12) and the carbon deposition at the fuel cell (fuel cell stack 12). A target CO concentration setting step sets a target CO concentration at a concentration lower than the limit CO concentration.

According to the configuration and method, it is possible to certainly suppress the carbon deposition in the fuel cell (fuel cell stack 12).

The fuel cell system 10A includes: a reformer temperature detecting unit T2 configured to detect a temperature of the partial oxidation reformer 54; and a target mixing ratio calculating unit 94 configured to calculate, from the temperature detected by the reformer temperature detecting unit T2 and the target CO concentration, a target mixing ratio of the raw fuel and air supplied to the partial oxidation reformer 54, by using a reforming map (power-generation reforming maps 98b) defining a relation among the temperature of the partial oxidation reformer 54, the CO concentration in the fuel gas produced in the partial oxidation reformer 54 and introduced into the fuel cell (fuel cell stack 12), and the mixing ratio. A mixing control unit 82 is configured to control operation of the mixing ratio adjusting unit 64 such that the mixing ratio becomes the target mixing ratio.

The method of controlling the fuel cell system 10A includes: a reformer temperature detecting step of detecting a temperature of the partial oxidation reformer 54; and a target mixing ratio calculating step of calculating, from the temperature detected by the reformer temperature detecting step and the target CO concentration, a target mixing ratio of the raw fuel and air supplied to the partial oxidation reformer 54, by using a reforming map (power-generation reforming maps 98b) defining a relation among the temperature of the partial oxidation reformer 54, the CO concentration in the fuel gas produced in the partial oxidation reformer 54 and introduced into the fuel cell (fuel cell stack 12), and the mixing ratio. A mixing control step controls operation of the mixing ratio adjusting unit 64 such that the mixing ratio becomes the target mixing ratio.

According to the configuration and method above, it is possible to accurately control the CO concentration in the fuel gas supplied to the fuel cell (fuel cell stack 12) to achieve the target CO concentration.

In the fuel cell system 10A, the target CO concentration setting unit 92 is configured to set the target CO concentration at a CO concentration that is highest in a region lower than the limit CO concentration. The target CO concentration setting step sets the target CO concentration at a CO concentration that is highest in a region lower than the limit CO concentration. According to the configuration and method, the power generation efficiency of the fuel cell (fuel cell stack 12) can be kept high.

The mixing control unit 82 is configured to control operation of the mixing ratio adjusting unit 64 such that the mixing ratio is adjusted by changing the amount of air supply with respect to the raw fuel. The mixing control step controls operation of the mixing ratio adjusting unit 64 such that the mixing ratio is adjusted by changing the amount of air supply with respect to the raw fuel. According to the configuration and method, the mixing ratio is adjusted without reducing the amount of raw fuel supply, which suppresses reduction in the amount of fuel component (hydrogen gas) in the fuel gas supplied to the fuel cell (fuel cell stack 12). This allows efficient operation of the fuel cell (fuel cell stack 12).

### (Second Embodiment)

Next, a fuel cell system 10B according to a second embodiment of the present invention will be described. In the fuel cell system 10B of the second embodiment, the same constituent elements as those of the above-described fuel cell system 10A of the first embodiment are labeled using the same reference numerals and detailed descriptions thereof are not repeated. In the fuel cell system 10B of the second embodiment, the same constituent elements as those of the fuel cell system 10A of the first embodiment offer the same functions and effects. This also applies to third and fourth embodiments described later.

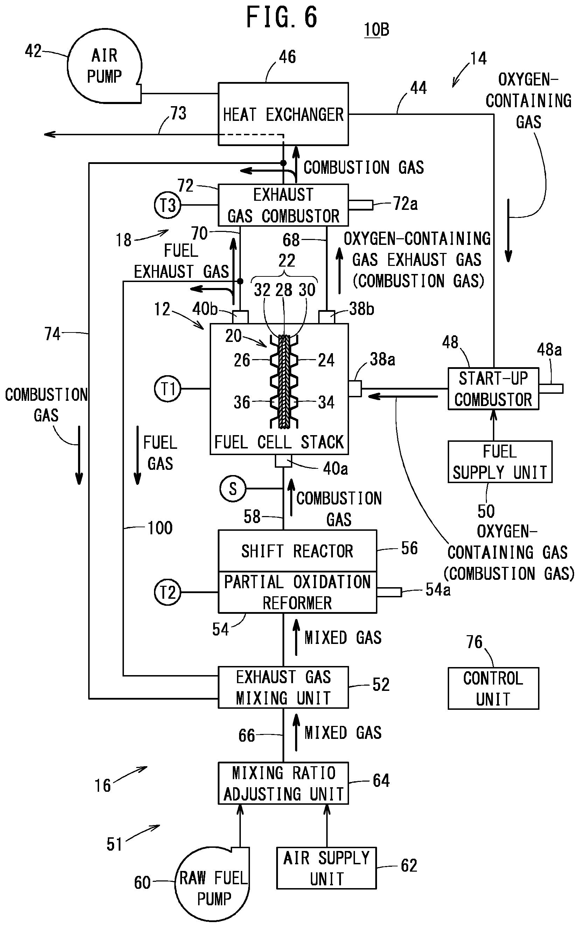

As shown in FIG. 6, the fuel cell system 10B of the second embodiment differs from the above-described fuel cell system 10A in that it includes a fuel exhaust gas circulation path 100 that connects the fuel gas discharge path 70 and the exhaust gas mixing unit 52. In this case, part of the fuel exhaust gas discharged from the fuel cell stack 12 to the fuel gas discharge path 70 is guided to the exhaust gas mixing unit 52 through the fuel exhaust gas circulation path 100 and reused in the fuel cell stack 12.

According to the configuration, the fuel exhaust gas can be used as fuel gas for the fuel cell (fuel cell stack 12) so that the power generation efficiency of the fuel cell (fuel cell stack 12) can be improved.

### (Third Embodiment)

Next, a fuel cell system 10C according to a third embodiment will be described. In the fuel cell system 10C of the third embodiment, the same constituent elements as those of the above-described fuel cell system 10A of the first embodiment are labeled using the same reference numerals and detailed descriptions thereof are not repeated.

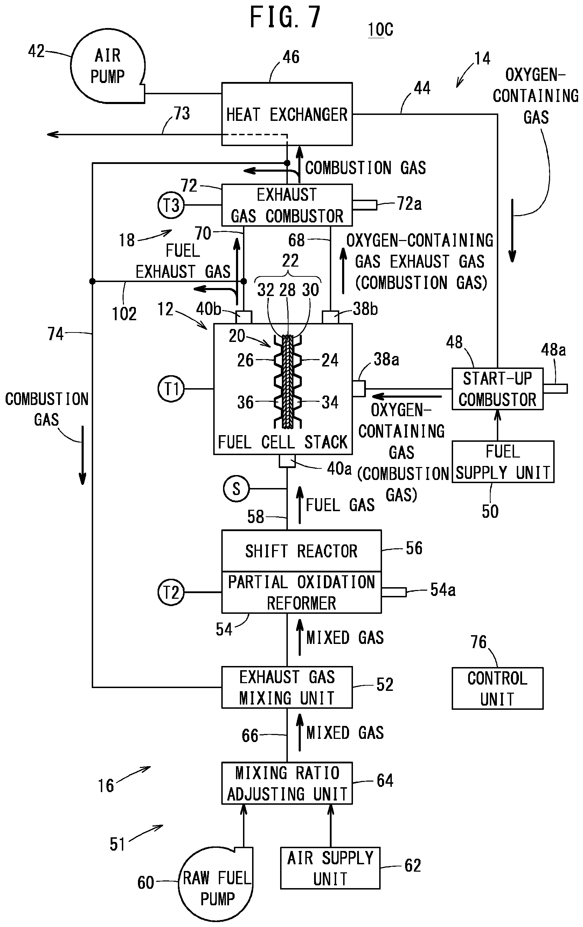

As shown in FIG. 7, the fuel cell system 10C of the third embodiment differs from the above-described fuel cell system 10A in that it includes a fuel exhaust gas circulation path 102 that connects the fuel gas discharge path 70 and the combustion gas introducing path 74. In this case, part of the fuel exhaust gas discharged from the fuel cell stack 12 to the fuel gas discharge path 70 is guided to the exhaust gas mixing unit 52 through the fuel exhaust gas circulation path 102 and the combustion gas introducing path 74, and reused in the fuel cell stack 12. This configuration offers the same effects as the second embodiment shown above.

### (Fourth Embodiment)

Next, a fuel cell system 10D according to a fourth embodiment of the present invention will be described. In the fuel cell system 10D of the fourth embodiment, the same constituent elements as those of the above-described fuel cell system 10C of the third embodiment are labeled using the same reference numerals and detailed descriptions thereof are not repeated.

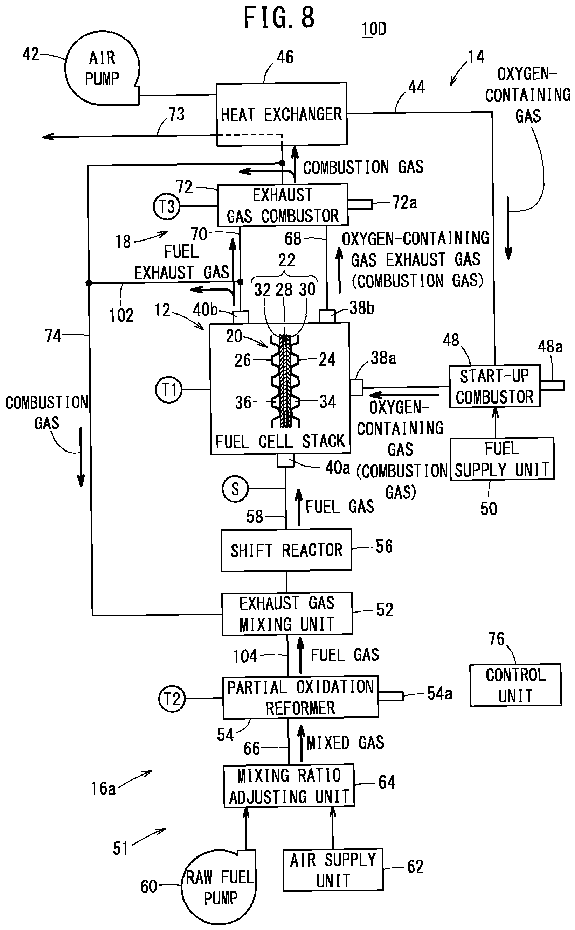

As shown in FIG. 8, a fuel gas supply device 16a of the fuel cell system 10D of the fourth embodiment includes an intermediate flow path 104 for guiding the fuel gas produced in the partial oxidation reformer 54 to the shift reactor 56, and an exhaust gas mixing unit 52 disposed on the intermediate flow path 104. That is, the partial oxidation reformer 54 is provided separately from the shift reactor 56. The combustion gas introducing path 74 is connected to the exhaust gas mixing unit 52.

In this invention, the configuration of the fourth embodiment (the configuration in which the exhaust gas mixing unit 52 is provided on the intermediate flow path 104 connecting the partial oxidation reformer 54 and the shift reactor 56) can of course be applied to the fuel cell systems 10A, 10B of the first and second embodiments.
A fuel cell system (10A) includes: a partial oxidation reformer (54); a shift reactor (56); a fuel cell stack (12); an oxygen-containing gas supply path (44) for supplying an oxygen-containing gas to the fuel cell stack (12); a startup combustor (48) disposed on the oxygen-containing gas supply path (44), for combusting a fuel to produce a combustion gas that contains water vapor; and a combustion gas introducing path (74) for guiding to the shift reactor (56), the combustion gas that was sent out from the startup combustor (48) and passed through the fuel cell stack (12).

## Claims

1. A fuel cell system (10A to 10D) comprising:
a partial oxidation reformer (54) that produces a fuel gas by subjecting a raw fuel to a partial oxidation reforming;
a shift reactor (56) that causes a shift reaction of carbon monoxide in the fuel gas produced in the partial oxidation reformer and water vapor;
an exhaust gas mixing unit (52) that is provided on a flow field upstream of the shift reactor;
an oxygen-containing gas supply path (44) for supplying an oxygen-containing gas;
a fuel cell (12) that is provided with: a fuel gas flow field (36) in which a fuel gas guided from the shift reactor flows; and an oxygen-containing gas flow field (34) in which an oxygen-containing gas guided from the oxygen-containing gas supply path flows, and that generates electric power by an electrochemical reaction between the fuel gas in the fuel gas flow field and the oxygen-containing gas in the oxygen-containing gas flow field;
a fuel gas discharge path (70) that communicates with the fuel gas flow field and in which a fuel exhaust gas flows, the fuel exhaust gas being a fuel gas that has at least partially been used by the fuel cell;
an oxygen-containing gas discharge path (68) that communicates with the oxygen-containing gas flow field and in which an oxygen-containing exhaust gas flows, the oxygen-containing exhaust gas being an oxygen-containing gas that has at least partially been used by the fuel cell;
an exhaust gas combustor (72) that combusts the fuel exhaust gas guided from the fuel gas discharge path and the oxygen-containing exhaust gas guided from the oxygen-containing gas discharge path to produce a combustion gas;
a startup combustor (48) that is disposed on the oxygen-containing gas supply path and that combusts a fuel to produce a combustion gas that contains water vapor; and
a combustion gas introducing path (74) that connects the exhaust gas combustor and the exhaust gas mixing unit,
wherein the combustion gas produced by the startup combustor is guided to the shift reactor through the oxygen-containing gas flow field of the fuel cell, the oxygen-containing gas discharge path, the exhaust gas combustor, the combustion gas introducing path, and the exhaust gas mixing unit.

2. The fuel cell system according to claim 1, further comprising:
a combustion gas send-out path (73) to which the combustion gas of the exhaust gas combustor is guided; and
a heat exchanger (46) for transferring heat between the combustion gas flowing in the combustion gas send-out path and the oxygen-containing gas flowing in the oxygen-containing gas supply path,
wherein the combustion gas introducing path is connected to the combustion gas send-out path on a side upstream of the heat exchanger.

3. The fuel cell system according to claim 1 or 2, further comprising:
an intermediate flow path (104) for guiding the fuel gas produced in the partial oxidation reformer to the shift reactor,
wherein the exhaust gas mixing unit is disposed on the intermediate flow path.

4. The fuel cell system according to any one of claims 1 to 3, further comprising:
a fuel exhaust gas circulation path (102) connecting the fuel gas discharge path and the combustion gas introducing path.

5. A method of controlling a fuel cell system, the fuel cell system including,
a partial oxidation reformer that produces a fuel gas by subjecting a raw fuel to a partial oxidation reforming,
a shift reactor that causes a shift reaction of carbon monoxide in the fuel gas produced in the partial oxidation reformer and water vapor,
an exhaust gas mixing unit that is provided on a flow field upstream of the shift reactor,
an oxygen-containing gas supply path for supplying an oxygen-containing gas,
a fuel cell that is provided with: a fuel gas flow field in which a fuel gas guided from the shift reactor flows; and an oxygen-containing gas flow field in which an oxygen-containing gas guided from the oxygen-containing gas supply path flows, and that generates electric power by an electrochemical reaction between the fuel gas in the fuel gas flow field and the oxygen-containing gas in the oxygen-containing gas flow field,
a fuel gas discharge path that communicates with the fuel gas flow field and in which a fuel exhaust gas flows, the fuel exhaust gas being a fuel gas that has at least partially been used by the fuel cell,
an oxygen-containing gas discharge path that communicates with the oxygen-containing gas flow field and in which an oxygen-containing exhaust gas flows, the oxygen-containing exhaust gas being an oxygen-containing gas that has at least partially been used by the fuel cell,
an exhaust gas combustor that combusts the fuel exhaust gas guided from the fuel gas discharge path and the oxygen-containing exhaust gas guided from the oxygen-containing gas discharge path to produce a combustion gas,
a startup combustor that is disposed on the oxygen-containing gas supply path and that combusts a fuel to produce a combustion gas that contains water vapor, and
a combustion gas introducing path that connects the exhaust gas combustor and the exhaust gas mixing unit,
the fuel cell system control method comprising:
a combustion step of combusting a fuel in the startup combustor provided on the oxygen-containing gas supply path to produce a combustion gas that contains water vapor;
a reforming step of performing the partial oxidation reforming of the raw fuel in the partial oxidation reformer to produce a fuel gas; and
a shift reaction step of
guiding the combustion gas produced by the startup combustor to the shift reactor through the oxygen-containing gas flow field of the fuel cell, the oxygen-containing gas discharge path, the exhaust gas combustor, the combustion gas introducing path, and the exhaust gas mixing unit and
causing, in the shift reactor, the shift reaction of the water vapor in the combustion gas and the carbon monoxide in the fuel gas produced in the reforming step.

6. The fuel cell system control method according to claim 5, wherein in the reforming step, at startup of the fuel cell, an ignition device of the partial oxidation reformer is not ignited until the combustion gas reaches the shift reactor, and the ignition device is ignited when the combustion gas has reached the shift reactor.

7. The fuel cell system control method according to claim 5 or 6, wherein in the combustion step, supply of the fuel from a fuel supply unit to the startup combustor is continued until the startup of the fuel cell is completed, and a combustion stop step of stopping the supply of the fuel from the fuel supply unit to the startup combustor is performed when the startup of the fuel cell is completed.

## Patentansprüche

1. Brennstoffzellensystem (10A bis 10D), welches aufweist:
einen Partielle-Oxidation-Reformer (54), der ein Brenngas erzeugt, indem er einen Rohbrennstoff einer partiellen Oxidationsreformierung unterzieht; einen Shift-Reaktor (56), der eine Shift-Reaktion von Kohlenmonoxid in dem von dem Partielle-Oxidation-Reformer erzeugten Brenngas und Wasserdampf hervorruft;
eine Abgasmischeinheit (52), die an einem Fließfeld stromauf des Shift-Reaktors vorgesehen ist;
einen Sauerstoffhaltiges-Gas-Zuführweg (44) zum Zuführen eines sauerstoffhaltigen Gases;
eine Brennstoffzelle (12), die versehen ist mit: einem Brenngas-Fließfeld (36), in dem ein von dem Shift-Reaktor geführtes Brenngas fließt; sowie einem Sauerstoffhaltiges-Gas-Fließfeld (34), in dem ein von dem Sauerstoffhaltiges-Gas-Zuführweg geführtes sauerstoffhaltiges Gas fließt, und die durch eine elektrochemische Reaktion zwischen dem Brenngas in dem Brenngas-Fließfeld und dem sauerstoffhaltigen Gas in dem Sauerstoffhaltiges-Gas-Fließfeld elektrischen Strom erzeugt;
einen Brenngas-Abführweg (70), der mit dem Brenngas-Fließfeld in Verbindung steht und in dem ein Brennabgas fließt, wobei das Brennabgas ein Brenngas ist, das von der Brennstoffzelle zumindest teilweise genutzt worden ist;
einen Sauerstoffhaltiges-Gas-Abführweg (68), der mit dem Sauerstoffhaltiges-Gas-Fließfeld in Verbindung steht und in dem ein sauerstoffhaltiges Abgas fließt, wobei das sauerstoffhaltiges Abgas ein sauerstoffhaltiges Gas ist, das von der Brennstoffzelle zumindest teilweise genutzt worden ist;
einen Abgasverbrenner (72), der das von dem Brenngas-Abführweg geführte Brennabgas und das von dem Sauerstoffhaltiges-Gas-Abführweg geführte sauerstoffhaltige Abgas verbrennt, um ein Verbrennungsgas zu erzeugen;
einen Startverbrenner (48), der an dem Sauerstoffhaltiges-Gas-Zuführweg angeordnet ist und der einen Brennstoff verbrennt, um ein Verbrennungsgas zu erzeugen, das Wasserdampf enthält; und
einen Verbrennungsgas-Einführweg (74), der den Abgasverbrenner mit der Abgas-Mischeinheit verbindet,
wobei das von dem Startverbrenner erzeugte Verbrennungsgas durch das Sauerstoffhaltiges-Gas-Fließfeld der Brennstoffzelle, den Sauerstoffhaltiges-Gas-Abführweg, den Abgasverbrenner, den Verbrennungsgas-Einführweg und die Abgas-Mischeinheit zu dem Shift-Reaktor geführt wird.

2. Das Brennstoffzellensystem nach Anspruch 1, das ferner aufweist:
einen Verbrennungsgas-Ausgabeweg (73), zu dem das Verbrennungsgas des Abgasverbrenners geführt wird; und
einen Wärmetauscher (46) zum Überführen von Wärme zwischen dem in dem Verbrennungsgas-Ausgabeweg fließenden Verbrennungsgas und dem in dem Sauerstoffhaltiges-Gas-Zuführweg fließenden sauerstoffhaltigen Gas,
wobei der Verbrennungsgas-Einführweg mit dem Verbrennungsgas-Ausgabeweg an einer Seite stromauf des Wärmetauschers verbunden ist.

3. Das Brennstoffzellensystem nach Anspruch 1 oder 2, das ferner aufweist: einen zwischenliegenden Strömungsweg (104) zum Führen des von dem Partielle-Oxidation-Reformer erzeugten Brenngases zu dem Shift-Reaktor, wobei die Abgas-Mischeinheit an dem zwischenliegenden Strömungsweg angeordnet ist.

4. Das Brennstoffzellensystem nach einem der Ansprüche 1 bis 3, das ferner aufweist:
einen Brennabgas-Zirkulationsweg (102), der den Brenngas-Abführweg mit dem Verbrennungsgas-Einführweg verbindet.

5. Verfahren zum Steuern eines Brennstoffzellensystems, wobei das Brennstoffzellensystem enthält:
einen Partielle-Oxidation-Reformer, der ein Brenngas erzeugt, indem er einen Rohbrennstoff einer partiellen Oxidationsreformierung unterzieht;
einen Shift-Reaktor, der eine Shift-Reaktion von Kohlenmonoxid in dem von dem Partielle-Oxidation-Reformer erzeugten Brenngas und Wasserdampf hervorruft;
eine Abgasmischeinheit, die an einem Fließfeld stromauf des Shift-Reaktors vorgesehen ist;
einen Sauerstoffhaltiges-Gas-Zuführweg zum Zuführen eines sauerstoffhaltigen Gases;
eine Brennstoffzelle, die versehen ist mit: einem Brenngas-Fließfeld, in dem ein von dem Shift-Reaktor geführtes Brenngas fließt; sowie einem Sauerstoffhaltiges-Gas-Fließfeld, in dem ein von dem Sauerstoffhaltiges-Gas-Zuführweg geführtes sauerstoffhaltiges Gas fließt, und die durch eine elektrochemische Reaktion zwischen dem Brenngas in dem Brenngas-Fließfeld und dem sauerstoffhaltigen Gas in dem Sauerstoffhaltiges-Gas-Fließfeld elektrischen Strom erzeugt;
einen Brenngas-Abführweg, der mit dem Brenngas-Fließfeld in Verbindung steht und in dem ein Brennabgas fließt, wobei das Brennabgas ein Brenngas ist, das von der Brennstoffzelle zumindest teilweise genutzt worden ist;
einen Sauerstoffhaltiges-Gas-Abführweg, der mit dem Sauerstoffhaltiges-Gas-Fließfeld in Verbindung steht und in dem ein sauerstoffhaltiges Abgas fließt, wobei das sauerstoffhaltiges Abgas ein sauerstoffhaltiges Gas ist, das von der Brennstoffzelle zumindest teilweise genutzt worden ist;
einen Abgasverbrenner, der das von dem Brenngas-Abführweg geführte Brennabgas und das von dem Sauerstoffhaltiges-Gas-Abführweg geführte sauerstoffhaltige Abgas verbrennt, um ein Verbrennungsgas zu erzeugen;
einen Startverbrenner, der an dem Sauerstoffhaltiges-Gas-Zuführweg angeordnet ist und der einen Brennstoff verbrennt, um ein Verbrennungsgas zu erzeugen, das Wasserdampf enthält; und
einen Verbrennungsgas-Einführweg, der den Abgasverbrenner mit der Abgas-Mischeinheit verbindet,
wobei das Brennstoffzellensystem-Steuerungsverfahren ferner aufweist:
einen Verbrennungsschritt zum Verbrennen eines Brennstoffs in dem an dem Sauerstoffhaltiges-Gas-Zuführweg vorgesehenen Startverbrenner, um ein Verbrennungsgas zu erzeugen, das Wasserdampf enthält;
einen Reformierungsschritt zur Durchführung der Partielle-Oxidation-Reformierung des Rohbrennstoffs in dem Partielle-Oxidation-Reformer, um ein Brenngas zu erzeugen; und
einen Shift-Reaktions-Schritt zum
Führen des vom Startverbrenner erzeugten Verbrennungsgases durch das Sauerstoffhaltiges-Gas-Fließfeld der Brennstoffzelle, den Sauerstoffhaltiges-Gas-Abführweg, den Abgasverbrenner, den Verbrennungsgas-Einführweg und die Abgas-Mischeinheit zu dem Shift-Reaktor, und
Veranlassen, in dem Shift-Reaktor, der Shift-Reaktion des Wasserdampfs in dem Verbrennungsgas und des Kohlenmonoxids im in dem Reform ierungsschritt erzeugten Brenngas.

6. Das Brennstoffzellen-Steuerungsverfahren nach Anspruch 5, wobei, beim Start der Brennstoffzelle, in dem Reformierungsschritt eine Zündvorrichtung des Partielle-Oxidation-Reformers nicht gezündet wird, bis das Verbrennungsgas den Shift-Reaktor erreicht, und die Zündvorrichtung gezündet wird, wenn das Verbrennungsgas den Shift-Reaktor erreicht hat.

7. Das Brennstoffzellen-Steuerungsverfahren nach Anspruch 5 oder 6, wobei in dem Verbrennungsschritt die Zufuhr des Brennstoffs von der Brennstoff-Zuführeinheit zu dem Startverbrenner fortgesetzt wird, bis das Starten der Brennstoffzelle abgeschlossen ist, und ein Verbrennungs-Stopp-Schritt zum Stoppen der Zufuhr des Brennstoffs von der Brennstoff-Zuführeinheit zu dem Startverbrenner durchgeführt wird, wenn das Starten der Brennstoffzelle abgeschlossen ist.

## Revendications

1. Système de pile à combustible (10A à 10D) comprenant :
un reformeur à oxydation partielle (54) qui produit un gaz combustible en soumettant un combustible brut à un reformage par oxydation partielle ;
un réacteur de conversion (56) qui provoque une réaction de conversion du monoxyde de carbone dans le gaz combustible produit dans le reformeur à oxydation partielle et de la vapeur d'eau ;
une unité de mélange de gaz d'échappement (52) qui est prévue sur un champ d'écoulement en amont du réacteur de conversion ;
une voie d'alimentation en gaz contenant de l'oxygène (44) pour fournir un gaz contenant de l'oxygène ;
une pile à combustible (12) qui est pourvue : d'un champ d'écoulement de gaz combustible (36) dans lequel s'écoule un gaz combustible guidé à partir du réacteur de conversion ; et d'un champ d'écoulement de gaz contenant de l'oxygène (34) dans lequel s'écoule un gaz contenant de l'oxygène guidé à partir de la voie d'alimentation en gaz contenant de l'oxygène, et qui génère de la puissance électrique par une réaction électrochimique entre le gaz combustible dans le champ d'écoulement de gaz combustible et le gaz contenant de l'oxygène dans le champ d'écoulement de gaz contenant de l'oxygène ;
une voie d'évacuation de gaz combustible (70) qui communique avec le champ d'écoulement de gaz combustible et dans laquelle s'écoule un gaz d'échappement combustible, le gaz d'échappement combustible étant un gaz combustible qui a été au moins partiellement utilisé par la pile à combustible ;
une voie d'évacuation de gaz contenant de l'oxygène (68) qui communique avec le champ d'écoulement de gaz contenant de l'oxygène et dans laquelle s'écoule un gaz d'échappement contenant de l'oxygène, le gaz d'échappement contenant de l'oxygène étant un gaz contenant de l'oxygène qui a été au moins partiellement utilisé par la pile à combustible ;
une chambre de combustion de gaz d'échappement (72) qui brûle le gaz d'échappement combustible guidé à partir de la voie d'évacuation de gaz combustible et le gaz d'échappement contenant de l'oxygène guidé à partir de la voie d'évacuation de gaz contenant de l'oxygène pour produire un gaz de combustion ;
une chambre de combustion de démarrage (48) qui est disposée sur la voie d'alimentation en gaz contenant de l'oxygène et qui brûle un combustible pour produire un gaz de combustion qui contient de la vapeur d'eau ; et
une voie d'introduction de gaz de combustion (74) qui relie la chambre de combustion de gaz d'échappement et l'unité de mélange de gaz d'échappement,
dans lequel le gaz de combustion produit par la chambre de combustion de démarrage est guidé vers le réacteur de conversion à travers le champ d'écoulement de gaz contenant de l'oxygène de la pile à combustible, la voie d'évacuation de gaz contenant de l'oxygène, la chambre de combustion de gaz d'échappement, la voie d'introduction de gaz de combustion, et l'unité de mélange de gaz d'échappement.

2. Système de pile à combustible selon la revendication 1, comprenant, en outre :
une voie de sortie de gaz de combustion (73) vers laquelle est guidé le gaz de combustion de la chambre de combustion de gaz d'échappement ; et
un échangeur de chaleur (46) pour le transfert de chaleur entre le gaz de combustion s'écoulant dans la voie de sortie de gaz de combustion et le gaz contenant de l'oxygène s'écoulant dans la voie d'alimentation en gaz contenant de l'oxygène,
dans lequel la voie d'introduction de gaz de combustion est reliée à la voie de sortie de gaz de combustion sur un côté amont de l'échangeur de chaleur.

3. Système de pile à combustible selon la revendication 1 ou 2, comprenant, en outre :
une voie d'écoulement intermédiaire (104) pour guider le gaz combustible produit dans le reformeur à oxydation partielle vers le réacteur de conversion,
dans lequel l'unité de mélange de gaz d'échappement est disposée sur la voie d'écoulement intermédiaire.

4. Système de pile à combustible selon l'une quelconque des revendications 1 à 3, comprenant, en outre :
une voie de circulation de gaz d'échappement combustible (102) reliant la voie d'évacuation de gaz combustible et la voie d'introduction de gaz de combustion.

5. Procédé de commande d'un système de pile à combustible, le système de pile à combustible comportant,
un reformeur à oxydation partielle qui produit un gaz combustible en soumettant un combustible brut à un reformage par oxydation partielle,
un réacteur de conversion qui provoque une réaction de conversion du monoxyde de carbone dans le gaz combustible produit dans le reformeur à oxydation partielle et de la vapeur d'eau,
une unité de mélange de gaz d'échappement qui est prévue sur un champ d'écoulement en amont du réacteur de conversion,
une voie d'alimentation en gaz contenant de l'oxygène pour fournir un gaz contenant de l'oxygène,
une pile à combustible qui est pourvue : d'un champ d'écoulement de gaz combustible dans lequel s'écoule un gaz combustible guidé à partir du réacteur de conversion ; et d'un champ d'écoulement de gaz contenant de l'oxygène dans lequel s'écoule un gaz contenant de l'oxygène guidé à partir de la voie d'alimentation en gaz contenant de l'oxygène, et qui génère de la puissance électrique par une réaction électrochimique entre le gaz combustible dans le champ d'écoulement de gaz combustible et le gaz contenant de l'oxygène dans le champ d'écoulement de gaz contenant de l'oxygène,
une voie d'évacuation de gaz combustible qui communique avec le champ d'écoulement de gaz combustible et dans laquelle s'écoule un gaz d'échappement combustible, le gaz d'échappement combustible étant un gaz combustible qui a été au moins partiellement utilisé par la pile à combustible,
une voie d'évacuation de gaz contenant de l'oxygène qui communique avec le champ d'écoulement de gaz contenant de l'oxygène et dans laquelle s'écoule un gaz d'échappement contenant de l'oxygène, le gaz d'échappement contenant de l'oxygène étant un gaz contenant de l'oxygène qui a été au moins partiellement utilisé par la pile à combustible,
une chambre de combustion de gaz d'échappement qui brûle le gaz d'échappement combustible guidé à partir de la voie d'évacuation de gaz combustible et le gaz d'échappement contenant de l'oxygène guidé à partir de la voie d'évacuation de gaz contenant de l'oxygène pour produire un gaz de combustion,
une chambre de combustion de démarrage qui est disposée sur la voie d'alimentation en gaz contenant de l'oxygène et qui brûle un combustible pour produire un gaz de combustion qui contient de la vapeur d'eau, et
une voie d'introduction de gaz de combustion qui relie la chambre de combustion de gaz d'échappement et l'unité de mélange de gaz d'échappement,
le procédé de commande de système de pile à combustible comprenant :
une étape de combustion pour la combustion d'un combustible dans la chambre de combustion de démarrage prévue sur la voie d'alimentation en gaz contenant de l'oxygène afin de produire un gaz de combustion qui contient de la vapeur d'eau ;
une étape de reformage pour la réalisation du reformage par oxydation partielle du combustible brut dans le reformeur à oxydation partielle afin de produire un gaz combustible ; et
une étape de réaction de conversion pour
guider le gaz de combustion produit par la chambre de combustion de démarrage vers le réacteur de conversion à travers le champ d'écoulement de gaz contenant de l'oxygène de la pile à combustible, la voie d'évacuation de gaz contenant de l'oxygène, la chambre de combustion de gaz d'échappement, la voie d'introduction de gaz de combustion, et l'unité de mélange de gaz d'échappement et
provoquer, dans le réacteur de conversion, la réaction de conversion de la vapeur d'eau dans le gaz de combustion et du monoxyde de carbone dans le gaz combustible produit à l'étape de reformage.

6. Procédé de commande de système de pile à combustible selon la revendication 5, dans lequel, à l'étape de reformage, au démarrage de la pile à combustible, un dispositif d'allumage du reformeur à oxydation partielle n'est pas allumé avant que le gaz de combustion n'atteigne le réacteur de conversion, et le dispositif d'allumage est allumé lorsque le gaz de combustion a atteint le réacteur de conversion.

7. Procédé de commande de système de pile à combustible selon la revendication 5 ou 6, dans lequel, à l'étape de combustion, l'alimentation du combustible, depuis une unité d'alimentation en combustible vers la chambre de combustion de démarrage, est poursuivie jusqu'à ce que le démarrage de la pile à combustible soit terminé, et une étape d'arrêt de la combustion pour arrêter l'alimentation du combustible depuis l'unité d'alimentation en combustible vers la chambre de combustion de démarrage, est réalisée lorsque le démarrage de la pile à combustible est terminé.
